# EUROPEAN PATENT APPLICATION

(11) **EP 4 198 575 A1**
(43) Date of publication of application: **21.06.2023**
(21) Application number: 21855974.8
(22) Date of filing: 11.08.2021
(51) Int. Cl.: G01T 1/167, G01T 1/24, G01T 1/36

(54) **RADIOACTIVE NUCLIDE ANALYSIS DEVICE, RADIOACTIVE NUCLIDE ANALYSIS METHOD AND RADIOACTIVE NUCLIDE ANALYSIS PROGRAM**

(30) Priority: 12.08.2020 JP 2020136312
(71) Applicant: Nihon Medi-Physics Co., Ltd, Koto-ku Tokyo, 136-0075 (JP)
(72) Inventor: HANADA, Takahisa, Tokyo 136-0075 (JP)
(74) Representative: TBK
(86) International application number: PCT/JP2021/029602
(87) International publication number: WO 2022/034895

(57) **Abstract**

A radionuclide analysis apparatus (1) includes: a radiation data detection unit (15) that detects energy of alpha-ray emitted from a radionuclide in a sample and another energy emitted from another radionuclide different from the energy of the alpha-ray; a nuclide identification unit (22) that identifies the radionuclide that has emitted the radiation by comparing a measurement spectrum Sa that is an energy spectrum based on the energy of the alpha-ray or another energy detected by the radiation data detection unit (15) with a standard spectrum Ssa; and a distribution acquisition unit (23) that obtains a distribution of a specific nuclide identified by the nuclide identification unit in the sample.

## Description

### TECHNICAL FIELD

The present invention relates to a radionuclide analysis apparatus, a radionuclide analysis method, and a radionuclide analysis program.

### BACKGROUND ART

Behavior of a radionuclide in a living body has been investigated for various purposes. For example, Patent Document 1 describes that two or more target biological molecules are separated and quantified using a beta-emitting radionuclide as a marker. Patent Document 1 describes that the invention is suited for DNA microarray deductions by marking a compound using the beta-emitting radionuclide.

Non-Patent Document 1 reports an example in which an organ is extracted from a living body to which a radioactive drug labeled with an alpha-emitting radionuclide is administered, and the extracted organ is sliced to evaluate a distribution of the radionuclide in the living body or in the organ.

### CITATION LIST

### PATENT DOCUMENT

Patent Document 1: JP 2004-523233 W

### NON-PATENT DOCUMENT

Non-Patent Document 1: Journal of Nuclear Medicine vol.51, page.1616-1623 (2010)

### SUMMARY OF THE INVENTION

For the purpose of investigating where and how a radionuclide itself or a compound labeled with the radionuclide is distributed in a sample, radiation emitted from the radionuclide is detected. However, among the radiations, the alpha-ray has a short range and low transmittance, and therefore, it is difficult to detect the alpha-ray from a position separated by a certain distance or more. Some radionuclides gradually undergo multiple stages of disintegration before reaching a stable isotope. Thus, when a detector is brought close to the sample in which the radionuclide is distributed in order to detect the radiation, radiations with different energies may be mixedly detected because the parent and progeny nuclides exist at the same position on the sample, or because the same type of radionuclide may emit a radiation with several different energies.

For this reason, when a sample in which an alpha-emitting radionuclide is distributed is analyzed, it is difficult to accurately detect an amount of radioactivity of a target nuclide and the distribution of the target nuclide on the sample by fractionating a plurality of radiation energies from each other.

The present invention has been made in view of such a point, and relates to a radionuclide analysis apparatus, a radionuclide analysis method, and a radionuclide analysis program capable of analyzing an energy distribution of a specific nuclide or a position distribution in the sample with high accuracy from the sample in which radionuclides that emit a plurality of radiation energies are distributed.

A radionuclide analysis apparatus of the present invention includes: a radiation detection unit that detects energy of alpha-ray emitted from a radionuclide contained in a sample and another energy which is energy of another radiation different from the energy of the alpha-ray; a nuclide identification unit that identifies the radionuclide that has emitted the radiation by comparing a measurement spectrum that is an energy spectrum based on the energy of the alpha-ray or the another energy detected by the radiation detection unit with a standard spectrum; and a distribution acquisition unit that obtains an energy distribution of a specific nuclide identified by the nuclide identification unit or a position distribution of the specific nuclide in the sample.

A radionuclide analysis program of the present invention causes a computer to implement: an input function that receives an input of information indicating a detection result of energy of alpha-ray emitted from a radionuclide contained in a sample and another energy which is energy of another radiation different from the energy of the alpha-ray; a nuclide identification function that identifies the radionuclide that has emitted radiation by comparing a measurement spectrum which is an energy spectrum based on the energy of the alpha-ray input or the another energy with a standard spectrum; and a distribution acquisition function that obtains a distribution of a specific nuclide identified by the nuclide identification function in the sample.

A radionuclide analysis method of the present invention includes: a radiation detection step of detecting energy of alpha-ray emitted from a radionuclide contained in a sample and another energy which is energy of another radiation different from the energy of the alpha-ray; a nuclide identification step of identifying the radionuclide that has emitted the radiation by comparing a measurement spectrum that is an energy spectrum based on the energy of the alpha-ray or the another energy detected in the radiation detection step with a standard spectrum; and a distribution acquisition step of obtaining a distribution of a specific nuclide identified in the nuclide identification step in the sample.

According to the present invention, it is possible to provide a radionuclide analysis apparatus, a radionuclide analysis method, and a radionuclide analysis program capable of analyzing an energy distribution of a specific nuclide or a position distribution in a sample with high accuracy from the sample in which radionuclides that emit radiation of different energies are distributed.

### BRIEF DESCRIPTION OF THE DRAWINGS

Fig. 1A is a diagram illustrating list data according to an embodiment of the present invention, Fig. 1B is a diagram for explaining an energy distribution and a position distribution of a radionuclide created from the list data, and Fig. 1C is a diagram for explaining a variation of a position distribution.
Fig. 2 is a diagram for explaining a radionuclide analysis apparatus according to the embodiment of the present invention.
Fig. 3 is a flowchart for explaining a radionuclide analysis method performed by an analysis processing device illustrated in Fig. 2.
Fig. 4A is a diagram illustrating an ideal energy spectrum measured by the present apparatus, and Fig. 4B is a diagram illustrating an example of a measurement spectrum expressed in an overlapping manner.
Figs. 5A and 5B are diagrams for explaining comparison between the measurement spectrum and a standard spectrum.
Fig. 6 is a diagram for explaining an effect of processing of the embodiment of the present invention.
Fig. 7 is a diagram illustrating the list data in which the list data illustrated in Fig. 1A is sorted in descending order of energy regardless of detection time.
Fig. 8A is a diagram illustrating another processing of step S105 in Fig. 3, and Fig. 8B is a diagram illustrating re-sorted data after the data is removed.
Fig. 9A is a diagram illustrating a measurement spectrum group, Fig. 9B is a diagram illustrating a standard spectrum of the measurement spectrum illustrated in Fig. 9A, Fig. 9C is a diagram illustrating the number of counts for each energy of the standard spectrum illustrated in Fig. 9B, Fig. 9D is a diagram illustrating a correction spectrum, and Fig. 9E is a diagram illustrating the number of counts for each energy of the correction spectrum illustrated in Fig. 9D.
Fig. 10A is a diagram illustrating the position distribution of a plurality of radionuclides, Fig. 10B is a diagram illustrating position information of data imaged and illustrating an example including another radionuclide, and Fig. 10C is a diagram illustrating the position information of the data imaged and illustrating an example in which no other radionuclides are included.

### DESCRIPTION OF EMBODIMENT

### <Overview>

Hereinafter, prior to specific description of the embodiment of the present invention, the overview of the invention will be described.

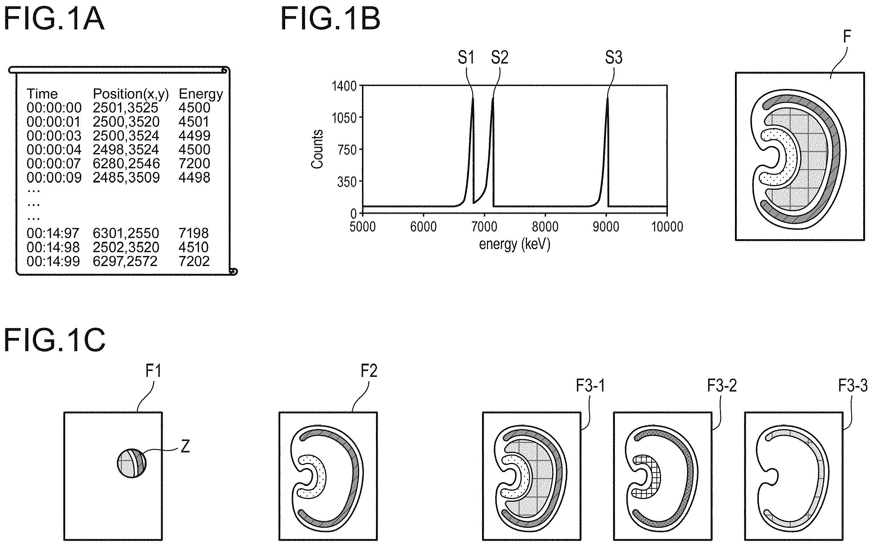

Figs. 1A, 1B, and 1C are diagrams for explaining a concept of analysis of a radionuclide according to the present invention. In the present invention, a section of a living body to which a drug containing a compound labeled with the radionuclide has been administered is cut out to prepare a sample, and the energy of alpha-ray emitted from the sample and the energy (hereinafter, referred to as "another energy") of other radiation different from the energy of the alpha-ray are detected by a radiation detector. Fig. 1A illustrates data (list data) in which energy of detected radiation, a detection position, and a detection timing are associated, and Fig. 1B is a diagram for explaining an energy spectrum (energy distribution) created from the list data and a position distribution of the radionuclide. Fig. 1C is a diagram for explaining a variation of the position distribution.

The list data is data in which the energy of the radiation to be input and the detection position (hereinafter, both are also collectively referred to as radiation data) thereof are sequentially recorded according to an input timing (time). Fig. 1B is a diagram illustrating energy spectra S1, S2, and S3 created with kinetic energy (hereinafter, simply referred to as "energy", and the unit is keV) illustrated in Fig. 1A on the horizontal axis and the number of times of detection of the radiation of this energy on the vertical axis, and a distribution image F of the radionuclide created from the energy spectra S1, S2, and S3. In the energy spectra S1, S2, and S3, the count number on the vertical axis represents an amount (count) of the radiation having this energy. As illustrated in Fig. 1B, a portion on a high energy side of the energy spectrum S1 and a portion on a low energy side of the energy spectrum S2 appear in the same energy range (it is also described that the energy spectra overlap).

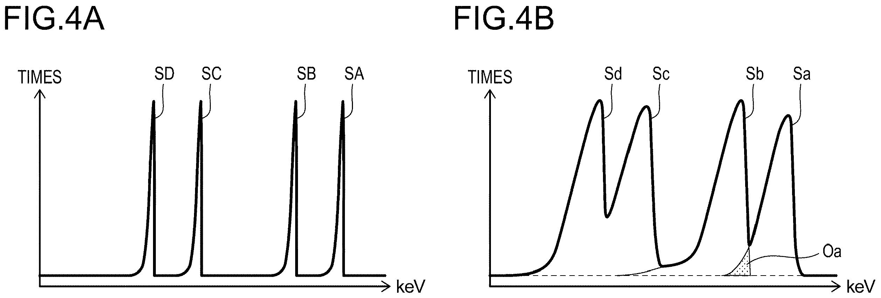

On the other hand, between a portion on the high energy side of the energy spectrum S2 and a portion on the low energy side of the energy spectrum S3, the count number is zero or equal to or less than a measurement error level. That is, in a case where the number of counts between the spectra adjacent to each other is a value having a low measurement error level, such as from an energy spectrum SA to an energy spectrum SD illustrated in Fig. 4A to be described later, the case is referred to as that the adjacent energy spectra do not overlap each other.

The distribution image F is a schematic diagram illustrating a state of the position distribution of the radionuclide in an image of a sample to be detected for radiation, and indicates that each radionuclide distinguished by a difference in shading is present at a higher concentration as shading of the image is deeper. The distribution image F illustrates a superimposed distribution of the radionuclides corresponding to the energy spectra S1, S2, and S3.

In the energy spectra S1, S2, and S3 illustrated in Fig. 1B, the energy having the peak corresponds to the radionuclide that has emitted the radiation. From this, the energy spectrum of the radiation emitted from a known radionuclide is stored as a standard spectrum, and the radionuclide that has emitted the radiation of the energy represented by a measurement spectrum can be identified by comparing the standard spectrum with the measurement spectrum measured.

Since the peak shapes (peak height and peak area) of the energy spectra S1, S2, and S3 indicate an amount of radionuclide, the present invention can obtain the energy distribution of each radionuclide present in the sample as illustrated in Fig. 1B. By associating such data with the detection position of the radiation, the present invention can obtain the position distribution (distribution image F) of the radionuclide.

In the above processing, when the energy spectra S1 and S2 overlap, there is such a trouble that the amount of radionuclide in the overlapping portion cannot be accurately determined. That is, in an overlapping region of the energy spectra S1 and S2, it is not possible to determine whether the detected radiation results from the nuclide corresponding to the energy spectrum S1 or the nuclide corresponding to the energy spectrum S2.

In such a case, the present invention is intended to accurately determine the energy distribution and the position distribution of each radionuclide by isolating the radionuclide that has emitted the radiation in the overlapping region of the energy spectrum.

According to the processing of obtaining the position distribution, as illustrated in Fig. 1C, it is possible to create a distribution image F1 indicating the position distribution only for a specific range Z in the sample. In addition, it is possible to create a distribution image F2 indicating a distribution only for a specific radionuclide. In addition, in the above processing, by creating distribution images F3-1, F3-2, and F3-3 of the radionuclide in the same detection range a plurality of times at time intervals, it is possible to detect a state of change in the type and concentration of the radionuclide over time. A difference in shading shown in the distribution images F, F-1, F-2, and F3-1 to F3-3 schematically indicates a difference in radionuclide, and the shading of the image schematically indicates a difference in concentration of radioactivity.

As described above, by accurately detecting the position distribution of a plurality of mixed radionuclides, the present invention can create the distribution images F1, F2, F3-1, F3-2, and F3-3 with high accuracy, and grasp the behavior of each radionuclide in the living body and the change in the type and concentration of a generated descendant nuclide.

The radionuclides each disintegrate according to their intrinsic half-lives, and a radioactive drug utilizes the radiation emitted at this time. Some radionuclides gradually undergo multiple stages of disintegration before reaching a stable isotope, and although the behavior of a parent nuclide can be controlled by labeling a compound that is likely to gather in a target organ of the drug, it is difficult to accurately predict the behavior of the nuclide after disintegration. Therefore, it can be said that the present invention is particularly suitable for development and experiments regarding the radioactive drug. In the present invention, the energy distribution of the radionuclide can also be extracted for a specific radionuclide, and/or its change over time can be detected.

### <Radionuclide analysis apparatus>

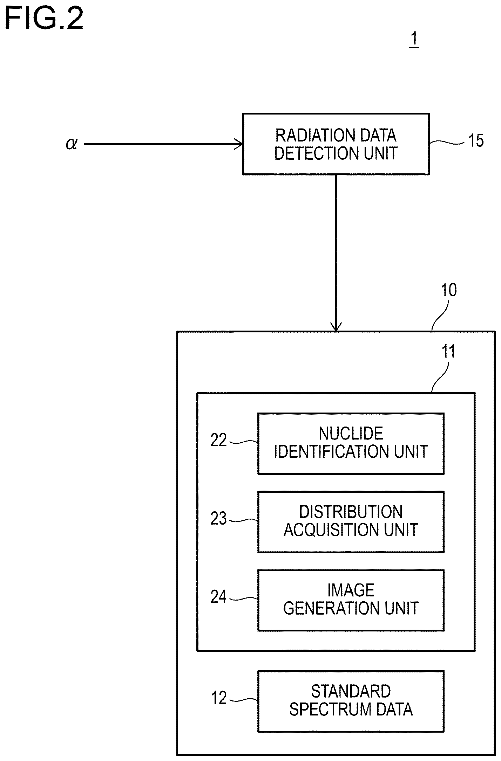

Fig. 2 is a diagram for explaining a radionuclide analysis apparatus 1 according to the present embodiment. The radionuclide analysis apparatus 1 includes a radiation detection unit that detects energy of the alpha-ray emitted from a radionuclide contained in a sample and another energy. The radionuclide analysis apparatus 1 of Fig. 2 includes a detection position acquisition unit that acquires a detection position of radiation having energy detected by the radiation detection unit together with the radiation detection unit. In the configuration illustrated in Fig. 2, a radiation data detection unit 15 functions as the radiation detection unit and the detection position acquisition unit.

In the present embodiment, for example, it is assumed that a small arithmetic processing device is provided in the radiation data detection unit 15, and list data in which the energy and the detection position are associated with each other is created in the radiation data detection unit 15. As illustrated in Fig. 1A, in the list data created by the radiation data detection unit 15, the energy and the detection position are recorded in association with each other in the order of detection timing. In the present embodiment, the radiation data detection unit 15 counts the number of times of detection for the radiation having the same energy to obtain the count number.

Here, the radiation data detection unit 15 detects the energy of the alpha-ray emitted from the radionuclide contained in the sample. The radiation data detection unit 15 also detects another energy, that is, an alpha-ray or a radiation other than the alpha-ray such as gamma-ray or beta-ray emitted by another type of radionuclide different in type from the radionuclide that has emitted the detected alpha-ray. In the present specification, hereinafter, the alpha-ray and other radiation are also inclusively and simply referred to as the radiation in some cases.

The radionuclide analysis apparatus 1 includes the analysis processing device 10. The analysis processing device 10 includes an arithmetic processing unit 11, and the arithmetic processing unit 11 includes a nuclide identification unit 22 that compares the measurement spectrum, which is an energy spectrum based on the alpha-ray energy or another energy detected, with the standard spectrum and identifies the radionuclide that has emitted radiation of this energy, and a distribution acquisition unit 23 that obtains the energy distribution of the identified nuclide (hereinafter, also referred to as "specific nuclide") and the position distribution of the identified nuclide in the sample. Furthermore, the analysis processing device 10 incorporates a memory for storing data (standard spectrum data) 12 of the standard spectrum used for identifying the radionuclide.

In addition, the arithmetic processing unit 11 includes an image generation unit 24 that generates an image representing the acquired distribution based on the acquired distribution.

The analysis processing device 10 is achieved by a known computer device, and has hardware such as a CPU (Central Processing Unit), a memory, an input/output interface, and a display screen, and a program for operating the hardware. The standard spectrum data 12 may be stored in a memory incorporated in the analysis processing device 10 or may be stored in an external memory. Furthermore, the standard spectrum data 12 may be acquired through a network line.

As the radiation data detection unit 15, one including a strip detector can be used. Among the strip detectors, a double-sided semiconductor strip detector (DSSD) is provided such that a strip electrode corresponding to an x axis is orthogonal to one surface of a flat plate and a strip electrode corresponding to a y axis is orthogonal to the other surface of the flat plate, charged particles generate electron-hole pairs according to energy in the detector, the electrodes detect the electron-hole pairs, and the electrode at passing points of the charged particles outputs a signal in response to the charged particles passing between the strip electrodes. According to such a configuration, it is possible to identify the coordinates at which a signal indicating that the charged particles have passed has been output, and to identify the radiation detection position. A spatial resolution of detection increases as an interval between the strip electrodes decreases.

The radiation data detection unit 15 is not limited to the configuration using the strip detector. For example, in the present embodiment, when it is not necessary to acquire the detection position, for example, an alpha-ray detector such as an alpha-ray spectrometer can be used. When the alpha-ray detector is used for the radiation data detection unit 15, a combination capable of detecting beta-rays or gamma-rays may be used.

The radiation data detected by the radiation data detection unit 15 is input to the nuclide identification unit 22. The nuclide identification unit 22 creates a measurement spectrum that is the energy spectrum of the radiation measured from the energy of the radiation and the number of times of detection. Then, the measurement spectrum is compared with the standard spectrum included in the standard spectrum data 12 to identify the radionuclide indicating the measurement spectrum.

The distribution acquisition unit 23 acquires the energy distribution of the radionuclide by integrating the spectrum, obtained by correcting the standard spectrum corresponding to the created measurement spectrum, in an appropriate energy range and quantifying an amount of radioactivity of the measurement spectrum.

The standard spectrum described above may be one in which the radionuclide can be identified as compared with the measurement spectrum in which the radionuclide is not identified, and may be one that has been measured in advance and converted into data. Furthermore, the standard spectrum may be measured by the radionuclide analysis apparatus 1 used for the measurement. When the standard spectrum and the measurement spectrum are measured by the same radionuclide analysis apparatus 1, a difference between the measurement spectrum and the standard spectrum due to a measurement environment can be suppressed to improve measurement accuracy. As a matter of course, the standard spectrum preferably has a clear profile (peak shape) from rising to a peak top and fall.

In addition, the distribution acquisition unit 23 can obtain not only the energy distribution of the measurement spectrum but also the position distribution of the radionuclide in at least a part of the sample. The sample of the present embodiment has a planar shape, and in the present embodiment, for example, the sample is a sliced biological tissue. At this time, the distribution acquisition unit 23 sets the detection range from the detection position where the radiation in an arbitrary energy range of the radionuclide is detected. In addition, an in-plane position distribution of the sample of the radionuclide is acquired from the number of times of detection of radiation in this range. The image generation unit 24 colors the image according to a distribution state of the radionuclide acquired by the distribution acquisition unit 23, and visualizes the concentration and spread of the radionuclide in the image.

### <Radionuclide analysis method>

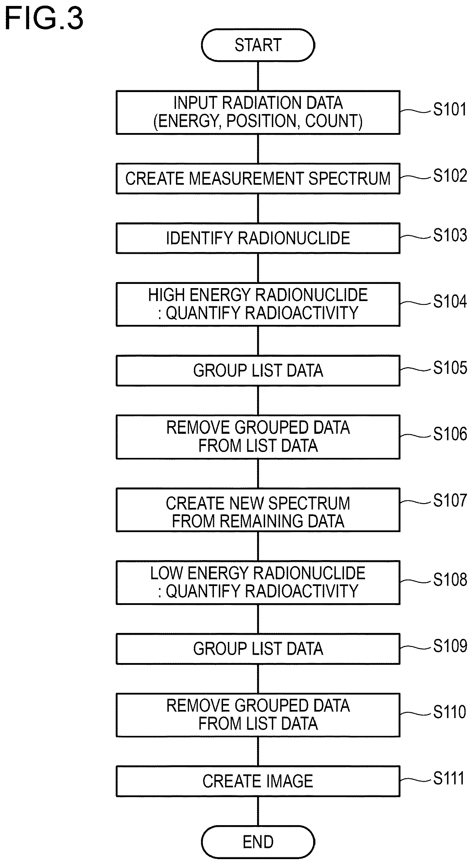

Fig. 3 is a flowchart for explaining a radionuclide analysis method performed by the analysis processing device 10 illustrated in Fig. 2. This flowchart is executed by each function realized by hardware and software of the analysis processing device 10 configured as a computer. That is, the radionuclide analysis method is implemented by the CPU executing a computer program stored in the memory in the analysis processing device 10.

The flowchart illustrated in Fig. 3 includes an input step of inputting the energy of the alpha-ray and another energy. In the present embodiment, since the radiation data detection unit 15 can identify the detection position of the radiation, the detection position of the radiation is input simultaneously with the energy detection of the radiation. In Fig. 3, such a step corresponds to step S101.

The radionuclide analysis method includes a nuclide identification step of comparing the measurement spectrum based on the energy of the alpha-ray or another energy with the standard spectrum and identifying the radionuclide that has emitted the radiation having this energy. In the flowchart of Fig. 3, the nuclide identification step corresponds to steps S102 and S103. The radionuclide analysis method of the present embodiment includes a distribution acquisition step of obtaining a distribution (energy distribution and position distribution) of the specific nuclide in the sample. In the flowchart of Fig. 3, the distribution acquisition step corresponds to steps S104 to S110. Furthermore, the flowchart of Fig. 3 includes an image creation step of creating the energy spectrum and the distribution image based on the acquired distribution (step S111).

### <Input step>

The radiation data detection unit 15 illustrated in Fig. 2 outputs the energy of the radiation emitted from the sample (not illustrated), the detection position, the detection timing, and the number of times of detection in the order of detection. The analysis processing device 10 inputs the energy, the detection position, the detection timing, and the number of times of detection output. At this time, the data of the energy, the detection position, the detection timing, and the number of times of detection may be directly input as input data to the analysis processing device 10, or may be input to the analysis processing device 10 after being temporarily input to and stored in another device. When the data is input to another device, the radiation data may be processed. As described above, in the present embodiment, the radiation data detection unit 15 outputs the energy of the radiation, the detection position, the detection timing, and the number of times of detection. The output of the radiation data detection unit 15 is input to the arithmetic processing unit 11 and sent to the next nuclide identification step.

### <Nuclide identification step>

Figs. 4A and 4B are diagrams for explaining the nuclide identification step. Fig. 4A illustrates an ideal energy spectrum obtained by the radionuclide analysis apparatus 1 of the present embodiment, and Fig. 4B illustrates an example of the measurement spectrum expressed in an overlapping manner. In either of Figs. 4A and 4B, the horizontal axis represents the energy (keV) of the radiation, and the vertical axis represents the number of times of detection (times) of the energy of each radiation. Each of the energy spectra SA, SB, SC, and SD illustrated in Fig. 4A appears without overlapping with other energy spectra. The energy spectra SA, SB, SC, and SD as described above have a clear profile, and it is possible to clearly identify the radionuclide and the amount of radioactivity.

On the other hand, in each of the measurement spectra Sa, Sb, Sc, and Sd illustrated in Fig. 4B, the fall on the low energy side is gentler than the rising on the high energy side, and the measurement spectrum overlaps with the adjacent energy spectrum. In the present embodiment, a region where adjacent energy spectra overlap is also referred to as an overlapping region Oa.

When the measurement spectra Sa, Sb, Sc, and Sd having the overlapping region Oa illustrated in Fig. 4B are measured, the profile of each energy spectrum becomes unclear, and it becomes difficult to quantify the radionuclide indicating this energy spectrum.

Hereinafter, processing of eliminating the above-described troubles in the nuclide identification step will be described.

The measurement spectra Sa, Sb, Sc, and Sd illustrated in Fig. 4B are energy spectra of radiation derived from the same or different radionuclides. Here, the measurement spectra Sa, Sb, Sc, and Sd are measurement spectra based on the energy of the alpha-ray and another energy, and the energy of the alpha-ray and another energy are emitted from the radionuclides belonging to the same or different decay chain. Here, the same decay chain refers to, as a series, a collection of a series of transformations of nuclides in which one parent nuclide is disintegrated to sequentially generate daughter nuclides, granddaughter nuclides, and descendant nuclides. As such an example, there is a neptunium series changing from ²²⁵Ac (actinium) to ²²¹Fr (francium) to ²¹⁷At (astatine) to ²¹³Bi (bismuth) to ²⁰⁹Pb (lead). Other examples of the decay chain include a thorium series which is a decay chain from ²³²Th (thorium) to ²⁰⁸Pb (lead), and a uranium series which is a decay chain from ²³⁸U (uranium) to ²⁰⁶Pb (lead).

Hereinafter, in the present embodiment, the measurement spectrum Sa indicates a radionuclide A, the measurement spectrum Sb indicates a radionuclide B, the measurement spectrum Sc indicates a radionuclide C, and the measurement spectrum Sd indicates a radionuclide D; however, in the present invention, the measurement spectra Sa, Sb, Sc, and Sd may be measurement spectra derived from different energies emitted from one or two or more radionuclides.

The nuclide identification unit 22 creates the measurement spectrum illustrated in Fig. 4B using the energy of the radiation and a count value output from the radiation data detection unit 15 (step S102). The creation of the measurement spectrum can be achieved by plotting the number of times of detection corresponding to the energy of the radiation. In the present embodiment, a spectrum including the plurality of measurement spectra Sa, Sb, Sc, and Sd is created, and the measurement spectrum includes a spectrum group of a group of Sa, Sb, Sc, and Sd.

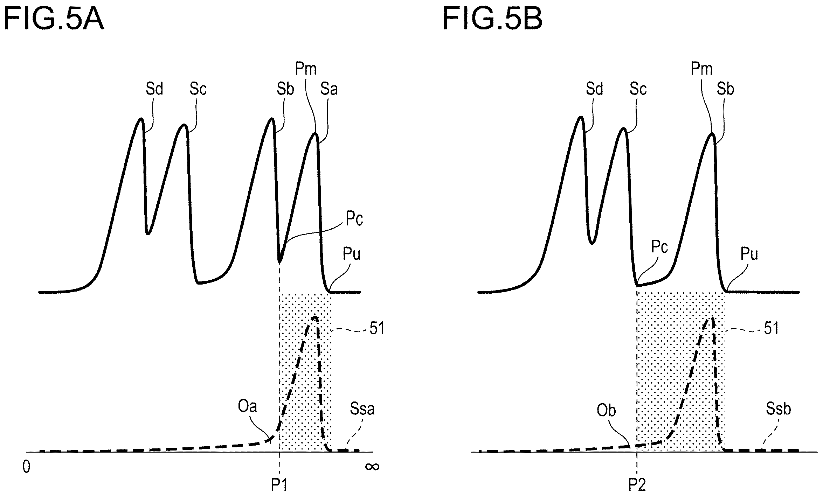

Figs. 5A and 5B are diagrams for explaining processing of correcting the amount of radioactivity of the measurement spectra Sa and Sb having the overlapping region. Fig. 5A is a diagram for explaining processing of obtaining the amount of radioactivity of the measurement spectrum Sa, and Fig. 5B is a diagram for explaining processing of obtaining the amount of radioactivity of the measurement spectrum Sb. Regarding the measurement spectrum Sa having the highest energy among the plurality of measurement spectra Sa, Sb, Sc, and Sd illustrated in Fig. 5A, a rising point at which the count number rises on the high energy side is defined as Pu, a maximum point at which the count number takes the maximum value is defined as Pm, and a point at which the count number monotonically decreasing from the maximum point Pm on the low energy side relative to the maximum point Pm turns to increase is defined as a turning point Pc.

The count number at the turning point Pc is a value exceeding the measurement error level, and the measurement spectrum Sa and the measurement spectrum Sb adjacent thereto overlap each other. However, as described below, in the present embodiment, an influence of the adjacent measurement spectrum can be suitably removed, and the amount of radioactivity applied to a target measurement spectrum can be calculated with high accuracy. That is, in the measurement spectrum Sa having the highest energy among the overlapping measurement spectra, the count number of other measurement spectra does not substantially affect the profile from the rising point Pu to the turning point Pc.

The nuclide identification unit 22 sequentially scans the measurement spectrum Sa expressed first at the highest energy among the measurement spectrum Sa to the measurement spectrum Sd expressed in an overlapping manner from the high energy side to the low energy side in the energy range. At this time, the nuclide identification unit 22 recognizes the rising point Pu, the maximum point Pm, and the turning point Pc, and specifies the standard spectrum corresponding to the measurement spectrum Sa from at least the energy value corresponding to the maximum point Pm. Furthermore, the standard spectrum corresponding to the measurement spectrum Sa may be specified by integrating the value of energy corresponding to the rising point Pu and/or the value of energy corresponding to the turning point Pc. Then, the standard spectrum that matches at least the energy value corresponding to the maximum point Pm is selected from the standard spectrum data 12. Then, the radionuclide (in this case, the radionuclide A) corresponding to the standard spectrum is specified as the radionuclide having the energy distribution represented by the measurement spectrum Sa. The same scanning is repeated to identify that the radionuclide B is the radionuclide having the energy distribution represented by the measurement spectrum Sb (step S103). In the standard spectrum data 12 of the present embodiment, data including the spectra of the administered radionuclide and the progeny nuclide of the radionuclide are stored as candidates.

At this time, the nuclide identification unit 22 may scan the plurality of measurement spectra including the measurement spectrum Sa depending on a state of the measurement spectrum, or may identify the standard spectra of a plurality of energy spectra by energy on the horizontal axis in Figs. 4A and 4B.

In identifying the radionuclide, the normalized standard spectrum may be deformed in accordance with the maximum point Pm of the measurement spectrum Sa. However, such a method cannot obtain sufficient reliability when the maximum point Pm of the measurement spectrum shows a value slightly different from the actual energy value due to an influence of scattering or the like. In such a case, in addition to the maximum point Pm, the rising of the standard spectrum may be matched with the rising point Pu of the measurement spectrum Sa on the highest energy side of the overlapping measurement spectra. In this way, the influence of other overlapping measurement spectra and the influence of scattering can be eliminated.

### <Distribution acquisition step>

Next, as illustrated in Fig. 3, the distribution acquisition unit 23 quantifies the radioactivity in order from the radionuclide on the high energy side, groups data of the radionuclides, and then removes the data from the list data. Furthermore, the distribution acquisition unit 23 performs quantification of the radioactivity and grouping of detection data for each radionuclide by similarly processing data on the lower energy side. In this processing, the distribution acquisition unit 23 quantifies the amount of radioactivity from the measurement spectrum Sa including higher energy among the measurement spectra Sa and Sb having overlapping energy ranges as illustrated in Fig. 5A (step S104). Then, the detection data derived from the quantified radionuclides are grouped (step S105) and removed from the list data (step S106). Subsequently, a new spectrum group is created from the remaining list data as illustrated in Fig. 5B (step S107), and the amount of radioactivity of the measurement spectrum Sb including the next highest energy is quantified as illustrated in Fig. 5B (step S108). Then, the detection data derived from the quantified radionuclides are grouped (step S109) and removed from the list data (step S110).

Here, the measurement spectrum including higher energy in the present embodiment is the measurement spectrum Sa including the highest energy among the measurement spectra to be subjected to quantification of radioactivity. However, the present embodiment is not limited to such an example, and the radioactivity may be quantified from the measurement spectrum having relatively high energy among the plurality of measurement spectra according to a tendency of the profile of the measurement spectrum.

Such processing is performed because the radioactivity of the measurement spectrum derived from another radionuclide does not affect the profile from the rising point Pu to the turning point Pc in the measurement spectrum having the highest energy among the overlapping measurement spectra. That is, in each of the measurement spectra Sa, Sb, Sc, and Sd to be analyzed in the present embodiment, the overlapping region Oa or an overlapping region Ob (Fig. 5B) in which tails overlap each other is steeply generated in the rising and fall. Thus, in the present embodiment, the measurement spectrum Sa on the high energy side does not include tails of other spectra, and the measurement spectrum Sb on the low energy side includes a tail of the measurement spectrum Sa. In addition, the overlapping region Ob of the measurement spectrum Sb affects the measurement spectrum on the lower energy side. In such a spectrum group, in the present embodiment, the measurement spectrum Sa on the high energy side is first removed from the spectrum group, and the influence of the measurement spectrum Sa is removed from the measurement spectrum Sb on the low energy side.

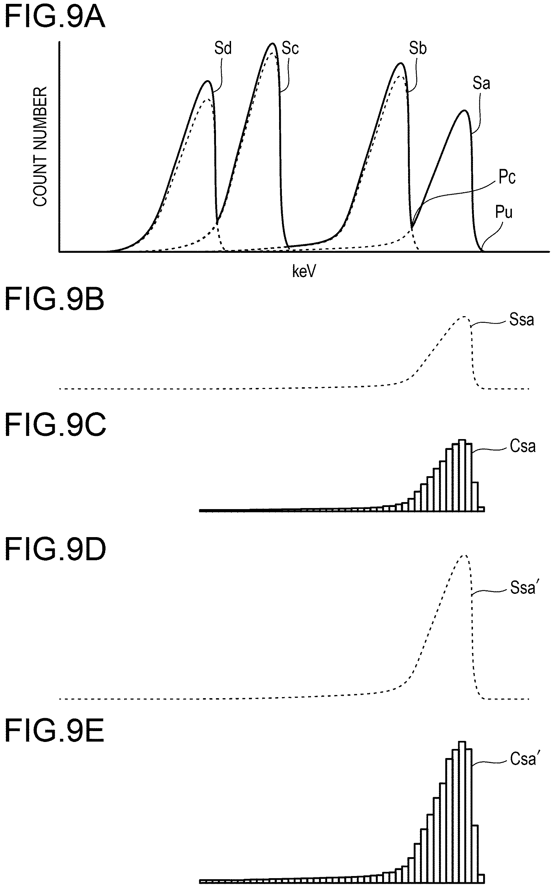

More specifically, as illustrated in Fig. 5A, the distribution acquisition unit 23 selects a standard spectrum Ssa (indicated by a broken line) corresponding to the radionuclide A specified from the spectrum group having overlapping energy ranges, and creates a spectrum Ssa' (Fig. 9D, hereinafter referred to as a "correction spectrum") corrected based on the turning point Pc from the rising point Pu of the measurement spectrum Sa. Then, the correction spectrum Ssa' is integrated in a range of 0 to any numerical value (for example, infinity), and the value obtained by the integration is estimated to be the total radioactivity amount of radionuclide A. In this way, the amount of radioactivity including not only a non-overlapping region of the measurement spectrum Sa but also the overlapping region Oa can be obtained.

On the other hand, in Fig. 5A, the profile from the rising point Pu to the turning point Pc of the measurement spectrum Sb is affected by the radionuclide A by overlapping with the measurement spectrum Sa. Thus, when a spectrum Ssb' obtained by correcting a standard spectrum Ssb is integrated in a range of 0 to infinity with respect to the measurement spectrum Sb having a shape that remains overlapping with the measurement spectrum Sa, the amount of radioactivity is quantified to be larger than the actual amount. On the other hand, in the present embodiment, as illustrated in Fig. 5B, by subtracting the correction spectrum Ssa' from the spectrum group having overlapping energy ranges, a new spectrum group not including detection derived from the radionuclide A can be obtained. Similarly, for the measurement spectrum Sb included in this new spectrum group, the standard spectrum Ssb is selected from the standard spectrum data 12 and corrected, and the obtained spectrum Ssb' can be integrated in the range of 0 to any numerical value (for example, infinity) to obtain the amount of radioactivity.

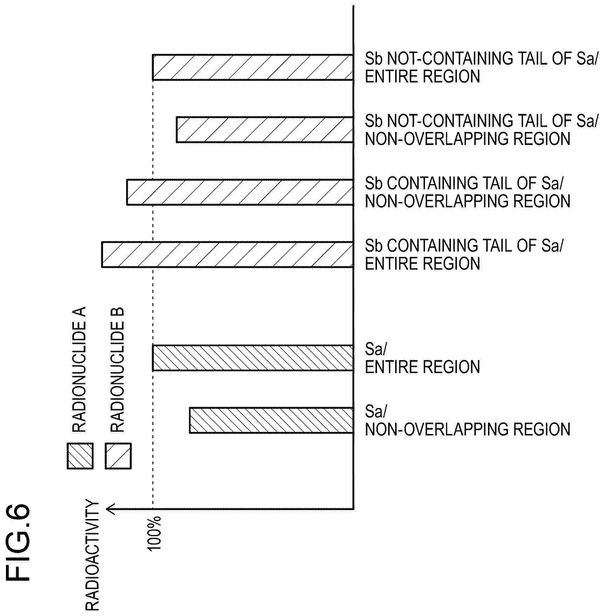

Fig. 6 is a schematic diagram for explaining the effect of the above processing, and a bar graph in Fig. 6 shows a degree of quantification result with respect to the original radioactivity of the radionuclide A or the radionuclide B when the radioactivity in the region of each item is quantified.

Among the above items, "Sa/non-overlapping region" is a result obtained by correcting the standard spectrum Ssa in the range from the rising point Pu to the turning point Pc with respect to the measurement spectrum Sa of Fig. 5A and quantifying the correction spectrum Ssa' in the same range. In this result, since the tail of the measurement spectrum Sa is not included, the result is underestimated relative to the original radioactivity of the radionuclide A.

"Sa/entire region" is a result obtained by correcting the standard spectrum Ssa in the range from the rising point Pu to the turning point Pc with respect to the measurement spectrum Sa of Fig. 5A and quantifying the correction spectrum Ssa' in the range of 0 to infinity. In this result, the tail of the measurement spectrum Sa is included in a region where the energy ranges overlap; however, an amount of original radioactivity of the radionuclide A can be obtained.

"Sb containing tail of Sa/entire region" is a result obtained by correcting the standard spectrum Ssb in the range from the rising point Pu to the turning point Pc with respect to the measurement spectrum Sb having a shape that remains overlapping with the measurement spectrum Sa of Fig. 5A and quantifying the correction spectrum Ssb' in the range of 0 to infinity. Since the tail of the measurement spectrum Sa is included in the entire region, the result is overestimated relative to the original radioactivity of the radionuclide B. In this result, since the tail of the measurement spectrum Sa is included, there is a possibility that the shape of the measurement spectrum Sb is distorted and correction using the standard spectrum Ssb is not performed correctly.

"Sb containing tail of Sa/non-overlapping region" is a result obtained by correcting the standard spectrum Ssb in the range from the rising point Pu to the turning point Pc with respect to the measurement spectrum Sb having a shape that remains overlapping with the measurement spectrum Sa of Fig. 5A and quantifying the correction spectrum Ssb' in the same range. Since the non-overlapping region does not include the tail of the measurement spectrum Sb but includes the tail of the measurement spectrum Sa, the quantitative result is different from the original radioactivity of the radionuclide B. Since the tail of the measurement spectrum Sa is included in the non-overlapping region, there is a possibility that the shape of the measurement spectrum Sb is distorted and correction using the standard spectrum Ssb is not performed correctly.

"Sb not-containing tail of Sa/non-overlapping region" is a result obtained by correcting the standard spectrum Ssb in the range from the rising point Pu to the turning point Pc with respect to the measurement spectrum Sb of Fig. 5B and quantifying the correction spectrum Ssb' in the same range. Since the tail portion of the measurement spectrum Sa and the tail portion of the measurement spectrum Sb are not included, the result is underestimated relative to the original radioactivity of the radionuclide B.

"Sb not-containing tail of Sa/entire region" is a result obtained by correcting the standard spectrum Ssb in the range from the rising point Pu to the turning point Pc with respect to the measurement spectrum Sb of Fig. 5B and quantifying the correction spectrum Ssb' in the range of 0 to infinity. In this result, the amount of original radioactivity of the radionuclide B can be obtained by removing the influence of other radionuclides from the spectrum group having overlapping energy ranges.

In order to remove the influence of the radionuclide on the high energy side from the spectrum group having overlapping energy ranges and accurately evaluate the measurement spectrum on the lower energy side, the distribution acquisition unit 23 groups the detection data of the radionuclide on the high energy side from the list data illustrated in Fig. 1A in any energy range (step S105) and removes the grouped data from the list data (step S106) as illustrated in Fig. 3. Hereinafter, such processing will be specifically described.

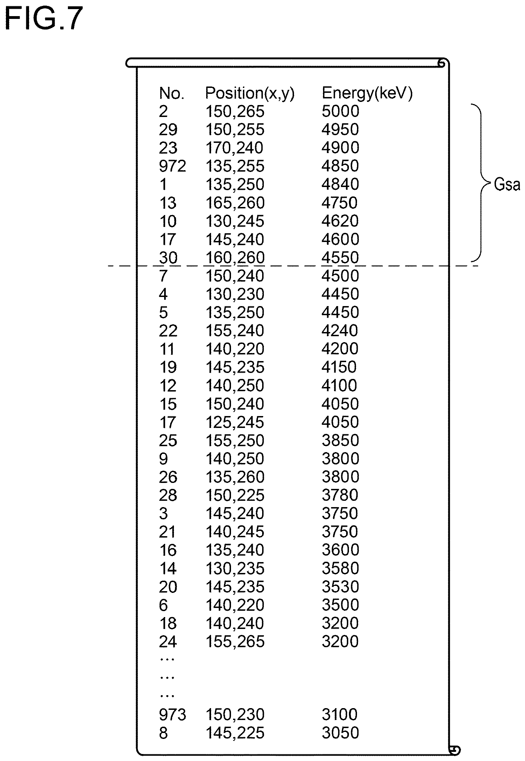

Fig. 7 is a diagram for explaining a part of the processing of step S105, and illustrates the list data (hereinafter, also referred to as "re-sorted data") in which the list data illustrated in Fig. 1A is sorted in descending order of energy regardless of the detection time. In the re-sorted data, a detection position where the energy is detected is represented by coordinates and associated with the energy. The distribution acquisition unit 23 divides the detected energy of the radionuclide into a plurality of groups according to the energy range of each radionuclide. At this time, in the present embodiment, the data of the energy included in the re-sorted data is divided by the energy corresponding to the rising point Pu to the turning point Pc of the measurement spectrum Sa illustrated in Fig. 5A to obtain a group Gsa. The group Gsa includes data constituting the non-overlapping region of the measurement spectrum Sa, and includes detection data derived only from the radionuclide A.

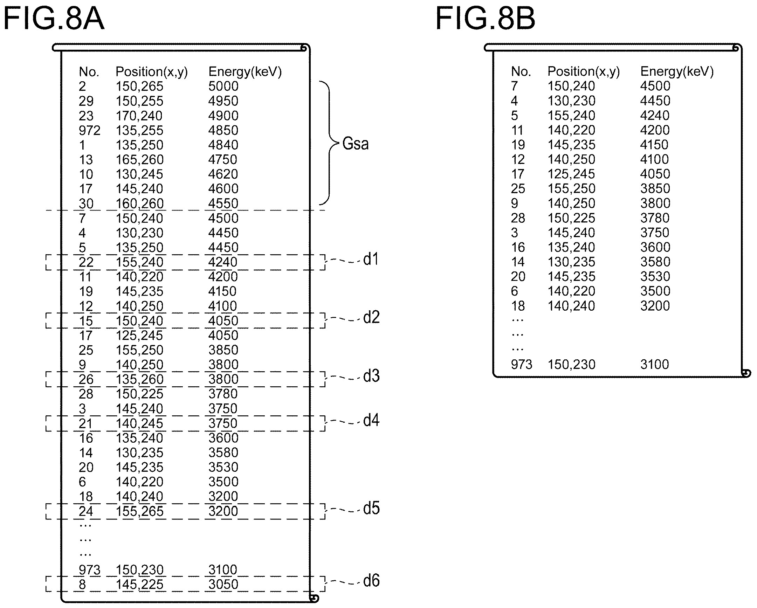

Fig. 8A is a diagram illustrating another processing of step S105. In step S105, it is estimated that specific data (d1 to d6 in this case) is detected and derived from the radionuclide A from the data not included in the group Gsa in the re-sorted data. Data obtained by adding the specific data to the group Gsa becomes a group GA, and is distinguished from other detection data as a detection data group derived from the radionuclide A. Fig. 8B illustrates data obtained by removing the detection data group corresponding to the group GA from the re-sorted data of Fig. 7. Since the re-sorted data illustrated in Fig. 8B does not include the detection data derived from the radionuclide A, when a histogram of energy and the number of times of detection is created for this re-sorted data, the measurement spectrum group illustrated in Fig. 5B is obtained. In the present embodiment, by using the re-sorted data illustrated in Fig. 8B, it is possible to correctly process data using the measurement spectrum Sb also for the radionuclide B in the same manner.

The radiations emitted from the same radionuclide are considered to have detection positions in close proximity to each other. From this, the distribution acquisition unit 23 estimates that the number of counts at any energy of any width derived from the correction spectrum Ssa', obtained by correcting the standard spectrum Ssa to the measurement spectrum Sa, among the detection data in which the detection position is in the same or any range as a condition specified in advance (that is, the position is similar to the group Gsa) is derived from the detection of the radionuclide A, and adds the detection data corresponding to the number of counts to the group Gsa to obtain the group GA. At this time, detection data in which the number of counts does not satisfy the condition at any energy of any width while the detection position satisfies the condition specified in advance, that is, detection data in which the number of counts exceeds and is not included in the group GA means that a radionuclide having energy lower than that of the radionuclide A is present at the same position as the radionuclide A.

Specifically, the distribution acquisition unit 23 selects data d1, d2, d3, d4, d5, and d6 corresponding to coordinates that are not included in the group Gsa and are in proximity to or coincide with the coordinates included in the group Gsa, from among the re-sorted data of Fig. 8A. The proximity of the coordinates can be determined, for example, by setting a minimum range including all of the coordinates included in the group Gsa and determining a positional relationship with the set range. In the present embodiment, for example, when coordinates to be determined are within a set range or when the coordinates are within the range and at a distance equal to or less than an arbitrarily set threshold from the range, it can be determined that the coordinates to be determined are in close proximity to the detection position of the data included in the group Gsa.

Next, the distribution acquisition unit 23 calculates the number of counts at any energy of any width among the detection data derived from the radionuclide A based on the correction spectrum Ssa', estimates the data corresponding to the number of counts for any energy of any width from "data corresponding to coordinates in close proximity to the detection position of the data included in the group Gsa" as the detection data derived from the radionuclide A, and adds the data to the group Gsa to obtain the group GA. The data group fractionated into the group GA is removed as being data indicating the energy emitted from the radionuclide A (step S106) and is not used in the subsequent processing of a nuclide having lower energy.

Figs. 9A, 9B, 9C, 9D, and 9E are schematic diagrams for explaining the calculation of the number of counts at any energy of any width. Fig. 9A illustrates the measurement spectrum group. Fig. 9B illustrates the standardized standard spectrum Ssa for the measurement spectrum Sa constituting the spectrum group illustrated in Fig. 9A. Fig. 9C illustrates a count number Csa for each any energy of any width in the standard spectrum Ssa. Fig. 9D illustrates the correction spectrum Ssa' obtained by correcting the standard spectrum Ssa in the non-overlapping region of the measurement spectrum Sa. Fig. 9E illustrates a count number Csa' for each any energy of any width in the correction spectrum Ssa'.

The count number Csa derived from the radionuclide A constituting the measurement spectrum Sa can be calculated from any energy of any width in the range of energy constituting the correction spectrum Ssa' obtained by correcting the standard spectrum Ssa based on the non-overlapping region (from the rising point Pu to the turning point Pc) of the measurement spectrum Sa.

The group GA is created by adding the detection data of the count number Csa to the group Gsa for any energy of each arbitrary width from among the data satisfying the condition of the same detection position as the group Gsa in the re-sorted data. According to such processing, data having the same position information as the non-overlapping region of the measurement spectrum Sa, including the overlapping region, can be grouped and fractionated by the number of data corresponding to the amount of radioactivity of the radionuclide A.

Next, the distribution acquisition unit 23 creates a histogram (new spectrum) from the re-sorted data (referred to as "remaining data" in Fig. 3) obtained by removing the data of the group GA from the data of the measurement spectrum created by the nuclide identification unit 22 (step S107). Since the new re-sorted data does not include the detection data derived from the radionuclide A, a spectrum group not including the measurement spectrum Sa, that is, a new spectrum group illustrated in Fig. 5B is obtained.

Next, the distribution acquisition unit 23 performs quantification of the radioactivity (step S108) and grouping of the detection data (step S109) for the radionuclide having the next highest energy peak among the new re-sorted data, and removal of the grouped data group from the re-sorted data (step S110). Thereafter, the distribution acquisition unit 23 repeats a series of processings until all the nuclides (or all arbitrary nuclides) identified by the nuclide identification unit 22 are grouped.

Through the above processing, the detection data of the radiation input in step S101 is fractionated into any group of the radionuclides identified by the nuclide identification unit 22 (excluding detection data of noise level).

After the above processing, the image generation unit 24 displays the energy spectrum or the distribution image F for each of the grouped radionuclides on a display (not shown in the drawings) or the like using the radioactivity amount quantified in step S104 and step S108 and detection position information of each radionuclide acquired in step S105 and step S109 (step S110).

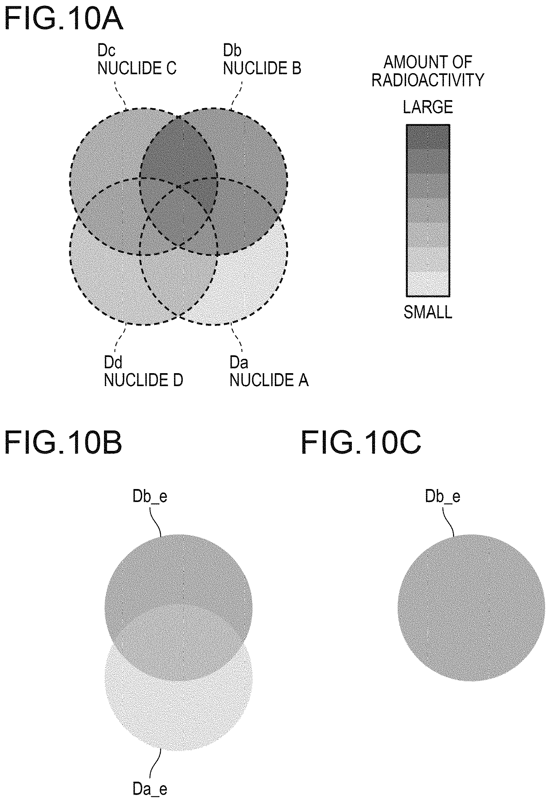

Figs. 10A, 10B, and 10C are diagrams for explaining the effects of the above processing. Fig. 10A schematically illustrates a relationship (position distribution) between the positions and the amounts of the radionuclides A, B, C, and D. In the present embodiment, as illustrated in Fig. 10A, it is assumed that the radionuclide A is distributed in a range Da, the radionuclide B is distributed in a range Db, the radionuclide C is distributed in a range Dc, and the radionuclide D is distributed in a range Dd. In Fig. 10A, each of the ranges Da to Dd is a range surrounded by a broken line. In Fig. 10A, the nuclides are drawn so that image intensities are different according to the amounts (Bq) of radioactivity of the radionuclides A to D. (Although the ranges Dc and Dd are not illustrated in Fig. 10B and the ranges Da, Db, and Dd are not illustrated in Fig. 10C, it is assumed that the ranges are at the same positions as in A.)

Fig. 10B illustrates the position information of data constituting the energy range from the rising point Pu to the turning point Pc of the measurement spectrum Sb illustrated in Fig. 5A by imaging when the radionuclide is present as illustrated in Fig. 10A. In Fig. 10B, a range indicating the amount of the radionuclide A is denoted by Da_e, and a range indicating the amount of the radionuclide B is denoted by Db_e. The energy range illustrated in Fig. 10B includes not only the non-overlapping region of the radionuclide B but also the tailing portion of the radionuclide A. Thus, in Fig. 10B, since only the data constituting the non-overlapping region among the radionuclides B present in the range Db is imaged (that is, data of the tailing portion is not included), an image density is relatively low. Furthermore, in Fig. 10B, the tailing portion of the radionuclide A included in the overlapping region is imaged in the range Da, and the distribution of only the radionuclide B cannot be accurately imaged.

Fig. 10C illustrates a result of imaging a group of the radionuclide B when the list data is grouped for each nuclide. In Fig. 10C, the range indicating the amount of the radionuclide B is indicated by Db_e. In Fig. 10C, since the position information included in the grouped data is similar to that of the non-overlapping region, the radionuclide other than the radionuclide B in the range Db_e is not imaged. Since the detection data corresponding to the count number of the tailing portion of the radionuclide B is included in Fig. 10C, the image of Fig. 10C is represented by an intensity corresponding to the original amount of radioactivity of the radionuclide B.

As a non-particularly limited application example of the above embodiment, for example, when a radionuclide or a compound labeled with a radionuclide is developed on a thin layer plate by a thin layer chromatography method, the present invention can be applied to analysis of a progress rate of a labeling reaction, analysis of stability of a preparation, and analysis of radioactive impurities contained in the preparation by obtaining an energy distribution of a specific nuclide distributed at a specific position on a sample (thin layer plate) or a position distribution in the sample. As another example, a radionuclide or a compound labeled with a radionuclide is administered to a living body, and removed after a lapse of a certain period of time, an organ or tissue is sliced on a plane to obtain an energy distribution or a position distribution in a prepared sample of a specific nuclide distributed at a specific position on the sample, so that the present invention can be applied to analysis of distribution of a parent nuclide or a descendant nuclide generated by the disintegration.

As described above, the present embodiment can detect the energy of the alpha-ray emitted from the radionuclide and another energy which is the energy of another radiation different from this energy. By comparing the measurement spectrum based on the detected energy with the standard spectrum to specify the radionuclide that has emitted radiation, the amount of radioactivity of the overlapping portion can be determined from the standard spectrum even when a part of the energy spectrum overlaps, and the entire distribution including the overlapping region can be acquired. In such an embodiment, since the distribution of the radionuclides can be accurately determined regardless of the overlap of the energy spectra, it is possible to extract each of different nuclides and analyze the energy or position distribution thereof with high accuracy.

The above embodiment includes the following technical concepts.
(1) A radionuclide analysis apparatus comprising: a radiation detection unit that detects energy of alpha-ray emitted from a radionuclide contained in a sample and another energy that is energy of another radiation different from the energy of the alpha-ray; a nuclide identification unit that identifies the radionuclide that has emitted the radiation by comparing a measurement spectrum that is an energy spectrum based on the energy of the alpha-ray or the another energy detected by the radiation detection unit with a standard spectrum; and a distribution acquisition unit that obtains an energy distribution of a specific nuclide identified by the nuclide identification unit or a position distribution in the sample.
(2) The radionuclide analysis apparatus according to (1), wherein the measurement spectrum includes a spectrum group indicating an energy range of the radiation emitted by each of a plurality of the radionuclides and an amount of radioactivity according to the energy range, and when the energy ranges of at least two of the measurement spectra of the spectrum group overlap with each other, the distribution acquisition unit identifies the amount of radioactivity in order from the measurement spectrum including higher energy among the measurement spectra having overlapping energy ranges, removes the measurement spectrum from the spectrum group, and identifies the amount of radioactivity of the measurement spectrum corresponding to the energy range including the next higher energy.
(3) The radionuclide analysis apparatus according to (1) or (2), further comprising a detection position acquisition unit that acquires a detection position of energy of the radiation detected by the radiation detection unit, wherein the sample has a planar shape, and the distribution acquisition unit obtains an in-plane position distribution of the radionuclide in at least a part of the sample.
(4) The radionuclide analysis apparatus according to (3), further comprising an image generation unit that creates an image representing the position distribution.
(5) The radionuclide analysis apparatus according to (3) or (4), wherein the distribution acquisition unit divides energies of the radionuclides into a plurality of groups according to the energy range emitted by each of the radionuclides, and fractionates the radionuclides in each of which the detection position is within a predetermined same position range and the belonging group is different into any of the groups according to an existence ratio of the radionuclides in the position range.
(6) The radionuclide analysis apparatus according to any one of (1) to (5), wherein the nuclide identification unit scans the measurement spectrum sequentially from a high energy side to a low energy side of the energy range emitted by the radionuclide, and identifies the standard spectrum that matches the measurement spectrum based on at least an energy value corresponding to a maximum point of energy of the alpha-ray.
(7) The radionuclide analysis apparatus according to any one of (1) to (6), wherein the energy of the alpha-ray and the another energy are emitted from the radionuclides belonging to the same or different decay chain.
(8) The radionuclide analysis apparatus according to any one of (1) to (7), wherein the radiation detection unit includes a strip detector.
(9) A radionuclide analysis program causing a computer to implement: an input function that receives an input of information indicating a detection result of energy of alpha-ray emitted from a radionuclide contained in a sample and another energy that is energy of another radiation different from the energy of the alpha-ray; a nuclide identification function that identifies the radionuclide that has emitted radiation by comparing a measurement spectrum that is an energy spectrum based on the energy of the alpha-ray input or the another energy with a standard spectrum; and a distribution acquisition function that obtains a distribution of a specific nuclide identified by the nuclide identification function in the sample.
(10) A radionuclide analysis method comprising: a radiation detection step of detecting energy of alpha-ray emitted from a radionuclide contained in a sample and another energy that is energy of another radiation different from the energy of the alpha-ray; a nuclide identification step of identifying the radionuclide that has emitted the radiation by comparing a measurement spectrum that is an energy spectrum based on the energy of the alpha-ray or the another energy detected in the radiation detection step with a standard spectrum; and a distribution acquisition step of obtaining a distribution of a specific nuclide identified in the nuclide identification step in the sample.
(11) The radionuclide analysis method according to (10), wherein the measurement spectrum includes a spectrum group indicating an energy range of the radiation emitted by each of a plurality of the radionuclides and an amount of radioactivity according to the energy range, when the energy ranges of at least two of the measurement spectra of the spectrum group overlap with each other, the distribution acquisition step identifies the amount of radioactivity in order from the measurement spectrum including higher energy among the measurement spectra having overlapping energy ranges, removes the measurement spectrum from the spectrum group, and identifies the amount of radioactivity of the measurement spectrum corresponding to the energy range including the next higher energy.
(12) The radionuclide analysis method according to (10) or (11), further comprising a detection position acquisition step of acquiring a detection position of energy of the radiation detected in the radiation detection step, wherein the sample has a planar shape, and the distribution acquisition step obtains an in-plane position distribution of the radionuclide in at least a part of the sample.
(13) The radionuclide analysis method according to (12), further comprising an image generation step of creating an image representing the position distribution.
(14) The radionuclide analysis method according to (12) or (13), wherein the distribution acquisition step divides energies of the radionuclides into a plurality of groups according to the energy range emitted by each of the radionuclides, and fractionates the radionuclides in each of which the detection position is within a predetermined same position range and the belonging group is different into any of the groups according to an existence ratio of the radionuclides in the position range.
(15) The radionuclide analysis method according to any one of (10) to (14), wherein the nuclide identification step scans the measurement spectrum sequentially from a high energy side to a low energy side of the energy range emitted by the radionuclide, and identifies the standard spectrum that matches the measurement spectrum based on at least an energy value corresponding to a maximum point of energy of the alpha-ray.
(16) The radionuclide analysis method according to any one of (10) to (15), wherein the energy of the alpha-ray and the another energy are emitted from the radionuclides belonging to the same or different decay chain.
(17) A computer program causing a computer to execute the radionuclide analysis method according to any one of (10) to (16) or a recording medium recording the computer program.

The present application claims priority based on Japanese Patent Application No. 2020-136312 filed on August 12, 2020, the entire disclosure of which is incorporated herein.

## Claims

1. A radionuclide analysis apparatus comprising:
a radiation detection unit that detects energy of alpha-ray emitted from a radionuclide contained in a sample and another energy that is energy of another radiation different from the energy of the alpha-ray;
a nuclide identification unit that identifies the radionuclide that has emitted the radiation by comparing a measurement spectrum that is an energy spectrum based on the energy of the alpha-ray or the another energy detected by the radiation detection unit with a standard spectrum; and
a distribution acquisition unit that obtains an energy distribution of a specific nuclide identified by the nuclide identification unit or a position distribution in the sample.

2. The radionuclide analysis apparatus according to claim 1, wherein
the measurement spectrum includes a spectrum group indicating an energy range of the radiation emitted by each of a plurality of the radionuclides and an amount of radioactivity according to the energy range, and
when the energy ranges of at least two of the measurement spectra of the spectrum group overlap with each other, the distribution acquisition unit identifies the amount of radioactivity in order from the measurement spectrum including higher energy among the measurement spectra having overlapping energy ranges, removes the measurement spectrum from the spectrum group, and identifies the amount of radioactivity of the measurement spectrum corresponding to the energy range including the next higher energy.

3. The radionuclide analysis apparatus according to claim 1 or 2, further comprising
a detection position acquisition unit that acquires a detection position of energy of the radiation detected by the radiation detection unit,
wherein the sample has a planar shape, and
the distribution acquisition unit obtains an in-plane position distribution of the radionuclide in at least a part of the sample.

4. The radionuclide analysis apparatus according to claim 3, further comprising
an image generation unit that creates an image representing the position distribution.

5. The radionuclide analysis apparatus according to claim 3 or 4, wherein
the distribution acquisition unit divides energies of the radionuclides into a plurality of groups according to the energy range emitted by each of the radionuclides, and fractionates the radionuclides in each of which the detection position is within a predetermined same position range and the belonging group is different into any of the groups according to an existence ratio of the radionuclides in the position range.

6. The radionuclide analysis apparatus according to any one of claims 1 to 5, wherein
the nuclide identification unit scans the measurement spectrum sequentially from a high energy side to a low energy side of the energy range emitted by the radionuclide, and identifies the standard spectrum that matches the measurement spectrum based on at least an energy value corresponding to a maximum point of energy of the alpha-ray.

7. The radionuclide analysis apparatus according to any one of claims 1 to 6, wherein the energy of the alpha-ray and the another energy are emitted from the radionuclides belonging to the same or different decay chain.

8. The radionuclide analysis apparatus according to any one of claims 1 to 7, wherein the radiation detection unit includes a strip detector.

9. A radionuclide analysis program causing a computer to implement:
an input function that receives an input of information indicating a detection result of energy of alpha-ray emitted from a radionuclide contained in a sample and another energy that is energy of another radiation different from the energy of the alpha-ray;
a nuclide identification function that identifies the radionuclide that has emitted radiation by comparing a measurement spectrum that is an energy spectrum based on the energy of the alpha-ray input or the another energy with a standard spectrum; and
a distribution acquisition function that obtains a distribution of a specific nuclide identified by the nuclide identification function in the sample.

10. A radionuclide analysis method comprising:
a radiation detection step of detecting energy of alpha-ray emitted from a radionuclide contained in a sample and another energy that is energy of another radiation different from the energy of the alpha-ray;
a nuclide identification step of identifying the radionuclide that has emitted the radiation by comparing a measurement spectrum that is an energy spectrum based on the energy of the alpha-ray or the another energy detected in the radiation detection step with a standard spectrum; and
a distribution acquisition step of obtaining a distribution of a specific nuclide identified in the nuclide identification step in the sample.
